# FASCICULE DE BREVET EUROPEEN

(11) **EP 3 233 983 B1**
(45) Date de publication et mention de la délivrance du brevet: **19.05.2021**
(21) Numéro de dépôt: 15821103.7
(22) Date de dépôt: 01.12.2015
(51) Int. Cl.: C08J 5/02, C08J 3/205, C08J 3/28

(54) **ELABORATION DE POLYMERES NANOCOMPOSITES PAR DES PRECURSEURS SOL-GEL EN VOIE NON HYDROLYTIQUE ASSISTEE PAR MICRO-ONDES**
ENTWICKLUNG VON NANOKOMPOSITPOLYMEREN MITTELS SOL-GEL-VORLÄUFERN DURCH MIKROWELLENUNTERSTÜTZTES NICHT-HYDROLYTISCHES VERFAHREN
DEVELOPMENT OF NANOCOMPOSITE POLYMERS BY SOL-GEL PRECURSORS BY MICROWAVE ASSISTED NON-HYDROLYTIC PROCESS

(30) Priorité: 15.12.2014 FR 1462405
(43) Date de publication de la demande: 25.10.2017
(73) Titulaire: PSA Automobiles SA, 78300 Poissy (FR); Centre National de la Recherche Scientifique (C.N.R.S.), 75016 Paris (FR); College de France, 75231 Paris Cedex 05 (FR); Université Pierre et Marie Curie (Paris 6), 75252 Paris Cedex 05 (FR)
(72) Inventeur: DELALANDE, Stephane, 91310 Longpont Sur Orge (FR); HOFFMAN, Chloe, 91180 St Germain Les Arpajon (FR); SANCHEZ, Clement, 91440 Bures sur Yvette (FR); ROZES, Laurence, 91800 Brunoy (FR); NICOLE, Lionel, 91800 Brunoy (FR)
(74) Mandataire: Bourguignon, Eric Pascal Jean
(86) Numéro de dépôt international: PCT/FR2015/053277
(87) Numéro de publication internationale: WO 2016/097521

(56) Documents cités:
- WO-A1-00/34393
- WO-A1-01/05880
- WO-A1-02/096982
- US-B1- 8 101 680

## Description

La présente invention concerne le domaine du renforcement ou de la fonctionnalisation des polymères thermoplastiques ou thermodurcissables par l'utilisation de nanocharges, afin de modifier, généralement améliorer, leurs propriétés intrinsèques.

Plus particulièrement, l'invention concerne un procédé de fabrication d'un polymère nanocomposite thermoplastique ou thermodurcissable au moyen d'une extrudeuse mono-vis ou bi-vis en utilisant des précurseurs moléculaires sol-gel qui se condensent sans apport d'eau dans le polymère fondu sous l'action de micro-ondes. L'invention concerne également un polymère nanocomposite thermoplastique ou thermodurcissable susceptible d'être obtenu par le procédé selon l'invention, l'utilisation d'un tel polymère nanocomposite pour la fabrication de pièces en matière plastique dans les domaines de l'automobile, le ferroviaire, la marine, l'aéronautique, l'aérospatial, l'emballage et les biens de consommation courante, le médical, le bâtiment, l'optique, l'électricité-électronique et l'agriculture, et une pièce pour véhicule constituée d'un tel polymère nanocomposite.

Les matériaux polymères représentent un domaine d'application extrêmement vaste. Tous les domaines industriels sont concernés par l'évolution constante des matériaux et de leurs caractéristiques. C'est le cas tout particulièrement pour l'industrie automobile.

L'effort de recherche concernant les polymères nanocomposites est à l'origine d'applications particulièrement intéressantes.

En 1917, l'industrie des pneumatiques se transforme avec l'incorporation du noir de carbone en tant que charge. Cette innovation a permis de multiplier par cinq la durée de vie des pneus. Le noir de carbone constitue un renfort dont les particules mesurent de 10 à 400 nm pour un diamètre moyen d'agrégats de 100 à 800 nm. L'introduction du noir de carbone en tant que charge a ouvert le domaine des polymères nanocomposites.

En effet, un polymère nanocomposite peut être défini comme un matériau solide multiphasique dont l'une des phases possède au moins une dimension inférieur à 100 nm et dont l'une des phases est une phase continue. Dans la pratique, l'introduction et la dispersion homogène de charges de taille nanométrique dans une matrice polymère permet d'obtenir de tels matériaux. Ces matériaux présentent des propriétés améliorées ou nouvelles, comme les propriétés thermiques, mécaniques, électriques, optiques, de retardateur de feu, barrière aux gaz ou inertie chimique. La particularité des nanocomposites, par rapport aux composites classiques, est de présenter une très grande interface polymère/charge.

Ainsi, les phénomènes situés à cette interface vont jouer un rôle non négligeable sur le comportement global de ces matériaux.

Différentes voies de synthèse peuvent être envisagées pour obtenir des polymères nanocomposites. Elles diffèrent principalement par le mode d'introduction des charges au sein du polymère.

Le mélange physique est le procédé le plus utilisé. Il consiste en un mélange direct de la phase polymère à l'état fondu et des renforts préformés. Le principal inconvénient de cette voie réside dans un problème de dispersion et de diffusion des charges préformées au sein du polymère visqueux.

A cet effet, les nanocomposites de polymères thermoplastiques sont à ce jour principalement réalisés par dispersion en extrudeuse bi-vis ou mono-vis de charges nanométriques synthétisées séparément. Ces charges sont principalement des nanoargiles (commerciales), des talcs ou mica à haut facteur de formes (une seule dimension nanométrique), des nanotubes de carbone (commerciales ou prototypes), des graphènes (laboratoire),...

La dispersion s'effectue lors de la phase de compoundage par action essentiellement mécano-thermique. Il peut exister une phase d'extrusion réactive pour favoriser le greffage du polymère sur les charges.

Dans la plupart des cas, la dispersion des nanocharges pré-synthétisées est limitée du fait des fortes interactions existant entre les charges. Les actions thermomécaniques sont insuffisantes pour disperser suffisamment les nanocharges. De ce fait, les modifications des propriétés du polymère sont très inférieures à celles attendues.

Par exemple, pour les nanotubes de carbone, le module de rigidité du polymère n'est augmenté qu'au maximum de 20 à 30% avec une perte de l'allongement à rupture du polymère.

Dans le cas des nanoargiles, des étapes préliminaires de séparation des feuillets par gonflement est nécessaire pour améliorer la dispersion des nanocharges. Cependant, le renforcement reste limité.

Les meilleurs résultats sont actuellement obtenus avec les argiles à haut facteur de forme qui sont essentiellement utilisés pour la réalisation de pièces de grandes dimensions.

De plus, le fait de manipuler des charges sous forme de poudre nanométrique peut générer des risques pour la santé et l'environnement qui nécessitent des précautions drastiques lors de leur manipulation. Ces matières sont toutes soumises à déclaration et font l'objet d'un suivi Hygiène Sécurité Environnement (HSE) particulier par les instances françaises et européennes.

Une deuxième voie, appelée voie sol-gel, consiste à mélanger les monomères organiques (à l'origine de la phase polymère) et inorganiques (à l'origine des charges ou renforts). Le procédé sol-gel peut être rapidement défini comme la conversion d'une solution de précurseur en un solide inorganique par une voie chimique. Les précurseurs sont, en général, des sels de métaux inorganiques ou des alcoxydes. La synthèse des deux phases se fait alors de manière simultanée et permet via le contrôle du procédé sol-gel l'obtention d'un large panel de matériaux (Novak et al., « Nanostructured organic-inorganic hybrid materials synthetized through simultaneous process, in Hybrid organic-inorganic composites », 1995).

La limite importante de cette technique concerne le contrôle de la polymérisation simultanée des espèces organiques et inorganiques.

On connait par exemple la publication W. Bahloul et al. (« Morphology and Viscoelasticity of PP/TiO(2) Nanocomposites Prepared by In Situ Sol-Gel Method », Journal of Polymer Science Part B-Polymer Physics, 2010) qui expose la synthèse de nanocomposites via une extrudeuse, préparés à partir des réactions d'hydrolyse-condensation d'un précurseur d'oxyde de titane pré-mélangé avec le polypropylène (PP) à l'état fondu.

Le PP est injecté en début de filière et fondu le long de la première section. Puis, le Ti(OⁿBu)₄ est injecté au sein du PP fondu dans la seconde section de l'extrudeuse. A la sortie, le taux d'hydrolyse est supérieur à 70% et les espèces inorganiques sont dispersées au sein du matériau. La condensation est achevée par un séjour de trois jours dans l'eau à 80°C. Le matériau obtenu est composé de petites particules de TiO₂ dont la taille est inférieure à 5 nm avec une taille d'agrégat de l'ordre de 130 nm. Cette étude met en évidence le rôle des précurseurs inorganiques au sein du polymère en tant que plastifiant.

De même, on connait également la publication S. Jiguet et al. (« Organic-inorganic hybrid material synthesis by on line coupling twin screw extruder with a microwave oven », International Polymer Processing, 2005) qui décrit la production continue via une extrudeuse d'un matériau hybride organique-inorganique.

Via ce procédé, l'éthylène vinyle acétate (EVA) est introduit dans l'extrudeuse, fondu puis les deux autres précurseurs sont introduits simultanément (polyoléfines thermoplastiques (TPOS), dibutyltinoxide (DBTO)). Lors de la première section de l'extrudeuse, il s'opère l'échange sur le bras pendant du polymère correspondant à une trans-estérification. Puis, l'utilisation des micro-ondes couplée à l'extrudeuse sur la seconde section permet la réticulation plus importante du polymère. Une dernière étape permet l'hydrolyse condensation des précurseurs inorganiques: les pièces sont placées pendant deux jours en milieu acide HCl 1M à 80°C. La caractérisation des matériaux obtenus montre l'obtention d'un réseau interpénétré EVA-Silice. De plus, le TPOS possède un rôle de plastifiant de l'EVA. Un plastifiant est une molécule ou un oligomère, à l'état solide ou à l'état liquide plus ou moins visqueux, ajouté aux formulations de différents types de matériaux pour les rendre plus flexibles, plus résistants, plus résilients et/ou plus faciles à manipuler. Donc, comme attendu, le réseau inorganique impacte directement les propriétés mécaniques du polymère.

Cependant, la limite principale reste le traitement induisant l'hydrolyse-condensation des précurseurs inorganiques. En effet, la liaison Si-O-polymère peut être sensible à l'hydrolyse. Il est alors possible d'observer la perte de réticulation du polymère pendant cette étape de traitement au HCl 1M à 80°C pendant deux jours. Le taux de réticulation initial est donc fondamental pour l'évolution du matériau lors du traitement. Cela représente une contrainte importante.

Une troisième voie a ainsi été envisagée, appelée sol-gel non hydrolytique. On peut définir les conditions non-hydrolytique comme la formation de pont M-O-M (métal-oxygène-métal) dans un solvant non aqueux où l'eau n'est pas un réactif de départ. Néanmoins, elle peut apparaitre au cours de la réaction. On peut donc considérer la phase organique à l'état fondu comme étant le solvant de réaction pour la formation des charges à partir de monomères inorganiques.

Plus particulièrement, on peut classer les réactions du procédé non-hydrolytique en fonction des réactifs et des solvants ou en fonction du produit éliminé au cours de la formation du pont M-O-M. La littérature recense sept principales réactions non-hydrolytique classées en fonction du produit éliminé au cours de la formation du pont M-O-M (Vioux et al., « Non hydrolytic sol-gel technology, Handbook of sol-gel sicence and technology processing, characterization and applications, 2004 ; Mutin et al., Nonhydrolytic processing of oxide-based materials : simple routes to control homogeneity, morphology, and nanostructure, 2009 ; Niederberger, « Nonaqueous sol-gel routes to metal oxide nanoparticles », 2007) :
- élimination d'halogénure d'alkyle ;
- élimination d'éther ;
- élimination d'esters ;
- élimination d'amide ;
- élimination de composés carbonylés α-β-insaturés ;
- élimination d'alcool avec formation d'une liaison C-C ; et
- dégradation thermique.

Cette voie possède plusieurs avantages. Tout d'abord, le contrôle des conditions de réaction ainsi que des espèces engagées permettra de balayer un large éventail de morphologie des renforts allant d'espèces nanométriques, comme les clusters ou nanocharges, aux réseaux interpénétrés. Le gain des propriétés, qu'elles soient mécanique, optique ou thermique, seront alors vraisemblablement totalement différentes en fonction du type de structure inorganique obtenue.

L'attrait important de ce mode de synthèse de polymère nanocomposite s'attache à la synergie des propriétés (mécaniques, optique, ...) des constituants des matériaux. Dans une autre optique, ce procédé est intégralement cohérent avec le principe de « chimie verte ». En effet, l'impact sur l'environnement de ce type de synthèse est réellement réduit par l'absence de solvant et des temps de réaction court impliquant un coût énergétique particulièrement faible.

Dans le monde actuel, le problème de l'impact écologique des industries et des laboratoires est une question centrale et les composés issus de la synthèse sol-gel non-hydrolytique ne font pas exception. La recherche de performance tant d'un point de vue environnemental que technique pousse vers des innovations en terme d'allégement et de procédé « vert ».

Dans cette problématique, l'utilisation des micro-ondes comme chauffage ouvre de nouvelles perspectives.

La chimie par micro-ondes est relativement nouvelle (première publication par Gedye et al., « The use of microwave-ovens for rapid organic synthesis », 1986). Aujourd'hui, le chauffage par micro-ondes est bien connu et largement utilisé pour les réactions organiques que ce soit pour les réactions en solvant, sans solvant, les réactions de polymérisation (Kempe et al., « Microwave-assisted polymerization : recent status and future perspectives », 2011) ou encore pour la catalyse.

Cependant, cette technique a été jusqu'à présent négligée par le domaine des matériaux.

Compte tenu de ce qui précède, l'invention a donc pour but de remédier aux inconvénients de l'art antérieur, et d'augmenter les propriétés des polymères nanocomposites synthétisés tout en réduisant les coûts énergétiques et en répondant aux contraintes environnementales de « chimie verte ». En particulier, l'invention vise à se placer dans une optique de processus sol-gel en voie non-hydrolytique de manière à réaliser des matériaux nanocomposites à base de polymères avec des propriétés mécaniques supérieures à celles des polymères vierges et à produire une attractivité complémentaire en termes de propriétés accessibles (propriétés magnétiques, électriques, optiques, ...) en fonction des nanocharges employées.

En outre, la synthèse de nanocomposite selon l'invention permet de s'affranchir de toutes les éventuelles problématiques HSE (Hygiène Sécurité Environnement) liées aux nanomatériaux (stockage, manutention, synthèse,...).

A cet effet, l'invention a pour premier objet un procédé de fabrication d'un polymère nanocomposite au moyen d'une extrudeuse mono-vis ou bi-vis comportant un fourreau, caractérisé en ce qu'il comprend les étapes suivantes de :
- ajout de précurseurs inorganiques ou hybrides inorganiques/organiques de nanocharges à un polymère thermoplastique ou à un pré-polymère pour résine thermodurcissable dans l'extrudeuse ;
- dispersion dans le polymère thermoplastique ou le pré-polymère pour résine thermodurcissable à l'état fondu des précurseurs inorganiques ou hybrides inorganiques/organiques de nanocharges ;
- condensation inorganique sous l'action de micro-ondes ; et
- obtention d'un polymère nanocomposite thermoplastique ou thermodurcissable.

L'invention a pour deuxième objet un polymère nanocomposite thermoplastique ou thermodurcissable susceptible d'être obtenu par le procédé selon l'invention.

L'invention a pour troisième objet l'utilisation d'un polymère nanocomposite selon l'invention, pour la fabrication de pièces en matière plastique dans les domaines de l'automobile, le ferroviaire, la marine, l'aéronautique, l'aérospatial, l'emballage et les biens de consommation courante, le médical, le bâtiment, l'optique, l'électricité-électronique et l'agriculture.

Enfin, l'invention a pour quatrième objet une pièce pour véhicule constituée d'un polymère nanocomposite thermoplastique ou thermodurcissable selon l'invention.

L'invention et les avantages qui en découlent seront mieux compris à la lecture de la description et des modes de réalisation non limitatifs qui suivent.

L'invention concerne un procédé de fabrication d'un polymère nanocomposite au moyen d'une extrudeuse mono-vis ou bi-vis comportant un fourreau.

L'extrusion est un procédé de fabrication thermomécanique par lequel un matériau compressé est contraint de traverser une filière ayant la section de la pièce à obtenir. On forme en continu un produit long (tube, tuyau, fibre textile) et/ou plat (plaque, feuille, film). Les cadences de production peuvent ainsi être élevées.

Une extrudeuse comprend en particulier une chambre chauffée, généralement horizontale, appelée fourreau, dans laquelle tournent une ou plusieurs vis entrainées par un réducteur motorisé. Ces vis, qui tournent dans une chemise en acier durci avec un jeu inférieur à quelques dixièmes de millimètres, provoquent un mélange, une chaleur de friction et une homogénéisation. Elles forcent la matière à travers des zones de chauffage graduelles soigneusement contrôlées à travers l'outillage (filière).

A l'entrée du fourreau, à la partie arrière d'une ou plusieurs vis, est située une trémie qui permet l'alimentation de l'extrudeuse en matière à extruder. Cette matière peut être amenée réchauffée ou non par exemple soit sous forme de granulés, soit sous forme de poudres, préparés à l'avance.

A la sortie du fourreau se trouve une tête qui permet le raccordement de la filière.

A la sortie de la filière, le profilé obtenu est chaud et déformable. Il doit être maintenu et refroidi pendant sa mise en forme définitive, opérations pour lesquelles des systèmes différents sont utilisés.

Le procédé de fabrication d'un polymère nanocomposite selon l'invention comprend plus particulièrement les étapes suivantes de :
- ajout de précurseurs inorganiques ou hybrides inorganiques/organiques de nanocharges à un polymère thermoplastique ou à un pré-polymère pour résine thermodurcissable dans l'extrudeuse ;
- dispersion dans le polymère thermoplastique ou le pré-polymère pour résine thermodurcissable à l'état fondu des précurseurs inorganiques ou hybrides inorganiques/organiques de nanocharges ;
- condensation inorganique sous l'action de micro-ondes ; et
- obtention d'un polymère nanocomposite thermoplastique ou thermodurcissable.

Les précurseurs inorganiques ou hybrides inorganiques/organiques de nanocharges sont ajoutés au polymère thermoplastique ou au pré-polymère pour résine thermodurcissable dans l'extrudeuse, la zone d'addition dépendant du type de précurseur utilisé, et plus particulièrement de sa réactivité.

Ils sont ainsi avantageusement ajoutés soit dans la zone d'alimentation (la trémie) de l'extrudeuse soit dans une zone de l'extrudeuse où le polymère est déjà à l'état fondu.

Le polymère peut être un pré-polymère pour résine thermodurcissable, par exemple choisi parmi les aminoplastes, les phénoplastes, les polyépoxydes, les polyuréthanes, les polysiloxanes.

Le polymère est préférentiellement un polymère thermoplastique, encore plus préférentiellement choisi parmi une polyoléfine, un polyamide, un polyimide, une polysulfone, un polyester, un polyether, un polyethercétone, les styréniques, les acrylates ou tout copolymère.

Les précurseurs inorganiques ou hybrides inorganiques/organiques peuvent se trouver sous la forme de monomères et d'oligomères. Ils sont préférentiellement choisis parmi des sels métalliques ou des alcoxydes de titane, de zirconium, de zinc, ou de tout autre métal de transition, d'étain, d'aluminium ou de silicium, des organosilanes tels que des polydiethoxysiloxanes, polydimethoxysiloxanes ou des copolymères diethoxysiloxane-s-butylaluminate, des alcoxydes modifiés par des fonctions organiques tels que des polydibutyltitanates, ou des composés sylilés de formule (RO)₃SiR'Si(OR)₃.

Un alcoxyde selon l'invention désigne un composé de formule M(OR)n où M est un métal de degré d'oxydation n choisi par exemple parmi le titane, zirconium, zinc, ou tout autre métal de transition, étain, aluminium ou silicium, et OR est un groupement alcoxyde correspondant à un alcool déprotonné.

Un alcoxyde selon l'invention peut être également modifié par un groupement carboxylate, phosphonate, β-dicétone. Il peut s'agir également d'un halogéno-alcoxyde MXₓ(OR)ₙ₋ₓ (X= Cl). La fonction organique choisie peut également porté un groupement fonctionnel qui peut être polymérisable ou non (alkyl, aryl) ou dans le groupe constitué par les fonctions acrylates, méthacrylates, époxydes et amino.

Les concentrations de précurseurs inorganiques ou hybrides inorganiques/organiques de nanocharges sont préférentiellement ajustées pour obtenir un partie minérale ou organominérale constituant entre 0 et 30% en volume du polymère nanocomposite final pour obtenir des propriétés optimales d'un tel nanocomposite.

Il est néanmoins possible de viser des concentrations plus élevées.

L'invention consiste ensuite à disperser dans le polymère thermoplastique ou le pré-polymère pour résine thermodurcissable à l'état fondu, à l'aide d'une extrudeuse mono-vis ou bi-vis, les précurseurs inorganiques ou hybrides inorganiques/organiques de nanocharges, cette dispersion pouvant être effectuée en présence ou en absence de nanocharges.

Les précurseurs inorganiques ou hybrides inorganiques/organiques de nanocharges sont utilisés pour la réaction de condensation inorganique préférentiellement en mélange avec un chlorure ou un acide de Lewis qui sert de catalyseur de réaction et d'agent de condensation.

L'étape de condensation inorganique est réalisée sous l'action des micro-ondes, la puissance et la durée étant à ajuster en fonction de la quantité de matière à traiter et de la permittivité des matériaux.

Les puissances utilisées sont typiquement de 0 à 10 kW.

La technique de chauffage par micro-ondes résulte de la mise en mouvement des espèces sensibles aux radiations micro-ondes (dipôles, ions) au sein du milieu. Les radiations sont comprises entre 1 et 300 GHz avec une fréquence habituelle de 2,45 GHz.

L'utilisation de micro-ondes pour la synthèse sol-gel non-hydrolytique offre une rampe de température rapide et un contrôle précis de la température de réaction, réduit les réactions secondaires conduisant à une augmentation de la pureté et du rendement, permet un chauffage homogène du milieu et un transfert énergétique direct réduisant considérablement l'effet de convection (wall effect) responsable des gradients thermiques et des réactions inhomogènes, crée un apport énergétique conséquent permettant de dépasser les barrières énergétiques des réactions les rendant possible, et raccourcit les temps de réaction dans une optique de réduction des coûts énergétiques et de « chimie verte ».

Dans le cas de composés qui ne sont pas ou peu sensibles (composés apolaires ou ayant des moments dipolaires faibles) aux radiations micro-ondes, l'utilisation de suscepteur, à base de SiC ou LaCrO₃, est possible. Cela permet la transmission par induction de l'échauffement micro-ondes et ainsi le chauffage du composé.

Selon un mode de réalisation avantageux de l'invention, l'étape de condensation inorganique est réalisée sous l'action de micro-ondes dans une zone d'accumulation de la matière en tête de fourreau dans l'extrudeuse au sein du polymère thermoplastique fondu en absence de solvant, le polymère fondu étant le seul solvant.

Dans ce cas, le générateur de micro-ondes est alors intégré au fourreau dans la zone d'accumulation de la matière et une zone d'évent en partie terminale du fourreau est avantageusement présente pour éliminer les éventuels produits secondaires de condensation.

Selon un autre mode de réalisation de l'invention, l'étape de condensation inorganique peut également être réalisée sous l'action de micro-ondes dans un moule à l'extérieur de l'extrudeuse lors de la réticulation pour le pré-polymère pour résine thermodurcissable.

Avec le procédé sol-gel non-hydrolytique assisté par micro-ondes selon l'invention, on obtient ainsi un polymère nanocomposite thermoplastique ou thermodurcissable qui présente notamment des propriétés mécaniques supérieures à celles des polymères vierges et qui peut présenter une attractivité complémentaire en termes de propriétés accessibles (propriétés magnétiques, électriques, optiques, ...) en fonction des nanocharges employées.

A cet effet, un autre objet de l'invention concerne un polymère nanocomposite thermoplastique ou thermodurcissable susceptible d'être obtenu par le procédé selon l'invention.

Les polymères nanocomposites ainsi réalisés ont des densités plus faibles et la pièce finale est plus légère. Un gain de l'ordre de 30 à 40% de masse peut être obtenu par rapport à l'utilisation d'un matériau classique soit une quarantaine de kilogrammes minimum sur un véhicule automobile.

L'invention concerne aussi l'utilisation d'un polymère nanocomposite selon l'invention, pour la fabrication de pièces en matière plastique dans les domaines de l'automobile, le ferroviaire, la marine, l'aéronautique, l'aérospatial, l'emballage et les biens de consommation courante, le médical, le bâtiment, l'optique, l'électricité-électronique et l'agriculture.

Les polymères selon l'invention pourront ainsi être utilisés dans de nombreux domaines industriels et développés par tous les fabricants de matière plastique.

En particulier, dans le cas d'un polymère nanocomposite thermoplastique, il est avantageusement utilisé soit directement en phase fondu pour être injecté dans le moule de la pièce à réaliser, soit granulé pour être ultérieurement refondu et injecté dans un moule pour réaliser la pièce.

Enfin, un dernier objet de l'invention concerne une pièce pour véhicule, constituée d'un polymère nanocomposite thermoplastique ou thermodurcissable selon l'invention.

Un véhicule désigne de manière générale un engin mobile, qui permet de déplacer des personnes ou des charges d'un point à un autre, préférentiellement selon l'invention un véhicule motorisé, et encore plus préférentiellement un véhicule automobile.

## Revendications

1. Procédé de fabrication d'un polymère nanocomposite au moyen d'une extrudeuse mono-vis ou bi-vis comportant un fourreau, **caractérisé en ce qu'**il comprend les étapes suivantes de :
- ajout de précurseurs inorganiques ou hybrides inorganiques/organiques de nanocharges à un polymère thermoplastique ou à un pré-polymère pour résine thermodurcissable dans l'extrudeuse ;
- dispersion dans le polymère thermoplastique ou le pré-polymère pour résine thermodurcissable à l'état fondu des précurseurs inorganiques ou hybrides inorganiques/organiques de nanocharges ;
- condensation inorganique sous l'action de micro-ondes ; et
- obtention d'un polymère nanocomposite thermoplastique ou thermodurcissable.

2. Procédé selon la revendication 1, **caractérisé en ce que** le polymère thermoplastique est choisi parmi une polyoléfine, un polyamide, un polyimide, une polysulfone, un polyester, un polyether, un polyethercétone, les styréniques, les acrylates ou tout copolymère.

3. Procédé selon la revendication 1 ou 2, **caractérisé en ce que** les précurseurs inorganiques ou hybrides inorganiques/organiques sont choisis parmi des sels métalliques ou des alcoxydes de titane, de zirconium, de zinc, ou de tout autre métal de transition, d'étain, d'aluminium ou de silicium, des organosilanes, des alcoxydes modifiés par des fonctions organiques, ou des composés sylilés de formule (RO)₃SiR'Si(OR)₃.

4. Procédé selon l'une des revendications 1 à 3, **caractérisé en ce que** les concentrations de précurseurs inorganiques ou hybrides inorganiques/organiques de nanocharges sont ajustées pour obtenir un partie minérale ou organominérale constituant entre 0 et 30% en volume du polymère nanocomposite final pour obtenir des propriétés optimales d'un tel nanocomposite.

5. Procédé selon l'une des revendications 1 à 4, **caractérisé en ce que** les précurseurs inorganiques ou hybrides inorganiques/organiques de nanocharges sont utilisés en mélange avec un chlorure ou un acide de Lewis qui sert de catalyseur de réaction et d'agent de condensation.

6. Procédé selon l'une des revendications 1 à 5, **caractérisé en ce que**, dans le cas du polymère nanocomposite thermoplastique, une zone d'évent en partie terminale du fourreau est présente pour éliminer les éventuels produits secondaires de condensation.

## Patentansprüche

1. Verfahren zur Herstellung eines Nanokompositpolymers mittels eines Einschnecken oder Doppelschneckenextruders mit einer Hülle, **gekennzeichnet dadurch, dass** es die folgenden Schritte umfasst:
- Zugabe von anorganischen oder anorganisch / organischen Hybridvorläufern von Nanofüllstoffen zu einem thermoplastischen Polymer oder zu einem Präpolymer für duroplastisches Harz im Extruder;
- Dispersion in dem thermoplastischen Polymer oder dem wärmehärtbaren Harzpräpolymer im geschmolzenen Zustand der anorganischen oder anorganisch / organischen Hybridvorläufer von nanofüllstoffen ;
- anorganische Kondensation unter Einwirkung von Mikrowellen ; und
- Erhalt eines thermoplastischen oder duroplastischen nanokompositpolymers.

2. Verfahren nach Anspruch 1, **dadurch gekennzeichnet, dass** das thermoplastische Polymer aus einem Polyolefin, einem Polyamid, einem Polyimid, einem Polysulfon, einem Polyester, einem Polyether, einem Polyetherketon, Styrolen, Acrylaten oder einem beliebigen Copolymer ausgewählt ist.

3. Verfahren nach Anspruch 1 oder 2, **dadurch gekennzeichnet, dass** die anorganischen oder hybriden anorganischen / organischen Vorläufer ausgewählt sind aus Metallsalzen oder Alkoxiden von Titan, Zirkonium, Zink oder einem anderen Übergangsmetall, Zinn, Aluminium oder Silizium, Organosilanen, Alkoxiden, modifiziert durch organische Funktionen, oder Silic Verbindungen der Formel (RO)₃SiR'Si(OR)₃.

4. Verfahren nach einem der Ansprüche 1-3, **gekennzeichnet dadurch, dass** die Konzentrationen anorganischer oder anorganischer / organischer Hybridvorläufer von Nanofüllstoffen eingestellt werden, um einen mineralischen oder organomineralen Teil zu erhalten, der zwischen 0 und 30 Vol.-% des endgültigen Nanokompositpolymers ausmacht, um ein Optimum zu erhalten Eigenschaften eines solchen nanokomposits.

5. Verfahren nach einem der Ansprüche 1 bis 4, **dadurch gekennzeichnet, dass** die anorganischen oder anorganisch / organischen Hybrid Vorläufer von Nanofüllstoffen im Gemisch verwendet werden, mit einem L WDVS Chlorid- oder Säure, die als Reaktionskatalysator und Mittel dient. der Kondensation.

6. Verfahren nach einem der Ansprüche 1 bis 5, das **dadurch gekennzeichnet ist, dass** im Fall des thermoplastischen nanokompositpolymers eine Entlüftungszone im Endteil der Hülle vorhanden ist, um jegliche Nebenprodukte der Kondensation zu entfernen.

## Claims

1. Process for manufacturing a nanocomposite polymer by means of a single screw extruder or twin-screw comprising a sleeve, **characterized in that** it comprises the following steps of :
- addition of inorganic or inorganic / organic hybrid precursors of nanofillers to a thermoplastic polymer or to a prepolymer for thermosetting resin in the extruder;
- dispersion in the thermoplastic polymer or the thermosetting resin prepolymer in the molten state of the inorganic or inorganic / organic hybrid precursors of nanofillers ;
- inorganic condensation under the action of microwaves ; and
- Obtaining a thermoplastic or thermosetting nano composite polymer.

2. Process according to claim 1, **characterized in that** the thermoplastic polymer is chosen from a polyolefin, a polyamide, a polyimide, a polysulfone, a polyester, a polyether, a polyetherketone, styrenics, acrylates or any copolymer.

3. Process according to claim 1 or 2, **characterized in that** the inorganic or hybrid inorganic / organic precursors are chosen from metal salts or alkoxides of titanium, zirconium, zinc, or any other transition metal, tin, aluminum or silicon, organosilanes, alkoxides modified by organic functions, or silic compounds of formula (RO)₃SiR'Si(OR)₃.

4. Process according to any of claims 1-3, **characterized in that** the concentrations of precursors, inorganic or hybrid inorganic / organic nanofillers are adjusted to obtain a mineral or organomineral portion constituting between 0 and 30% by volume of the nanopolymer final composite to obtain optimal properties of such nanocomposite.

5. Process according to one of claims 1 to 4, **characterized in that** the inorganic or inorganic / organic hybrid precursors of nanofillers are used in admixture with a Lewis chloride or acid which serves as reaction catalyst and agent of condensation.

6. Process according to one of claims 1 to 5, **characterized in that**, in the case of polymer nanocomposite thermoplastic, a vent area terminal part of the sleeve is present to remove any condensation by-products.
